# EUROPEAN PATENT APPLICATION

(11) **EP 4 794 175 A1**
(43) Date of publication of application: **19.08.2026**
(21) Application number: 26154147.8
(22) Date of filing: 26.01.2026
(51) Int. Cl.: H02K 3/50, H02K 5/20, H02K 9/19

(54) **MOTOR UNIT**

(30) Priority: 14.02.2025 JP 2025022441
(71) Applicant: Toyota Jidosha Kabushiki Kaisha, Toyota-shi, Aichi-ken 471-8571 (JP)
(72) Inventor: OHTA, Kei, TOYOTA-SHI, AICHI-KEN, 471-8571 (JP); OHIRA, Kengo, TOYOTA-SHI, AICHI-KEN, 471-8571 (JP); USAMI, Kazuaki, TOYOTA-SHI, AICHI-KEN, 471-8571 (JP); YAMATO, Fumiaki, TOYOTA-SHI, AICHI-KEN, 471-8571 (JP); MANABE, Hideki, TOYOTA-SHI, AICHI-KEN, 471-8571 (JP); ASAOKA, Hironori, TOYOTA-SHI, AICHI-KEN, 471-8571 (JP); SUZUKI, Yasunori, TOYOTA-SHI, AICHI-KEN, 471-8571 (JP)
(74) Representative: Cabinet Beau de Loménie

(57) **Abstract**

A motor unit (2) includes: a housing (10); a stator core (46); a stator coil (48) provided on the stator core (46) and having a first coil end (48A) protruding from an end surface of the stator core (46); a bus bar module (14) that is connected to the first coil end (48A) of the stator coil (48); and a spacer (16) provided between the end surface of the stator core (46) and the bus bar module (14) in the axial direction. The housing (10) includes a first supply flow path (26B) that has a housing opening (27B) on a surface facing the spacer (16) in the radial direction and supplies a refrigerant toward the spacer (16). The spacer (16) includes a second supply flow path (80) that extends between a first spacer opening in the inner peripheral surface of the spacer (16) and a second spacer opening in the outer peripheral surface of the spacer (16) and supplies the refrigerant toward the first coil end (48A).

## Description

### BACKGROUND OF THE INVENTION

### 1. Field of the Invention

The technology disclosed in the present specification relates to a motor unit.

### 2. Description of Related Art

Japanese Unexamined Patent Application Publication No. 2023-067111 (JP 2023-067111 A) discloses a motor unit including: a housing; a stator core that is an annular body housed in the housing and extending along the axial direction, the stator core having an end surface located on one side in the axial direction; a stator coil provided on the stator core and having a coil end protruding from the end surface of the stator core; and a bus bar module that faces the coil end from the outer side in the radial direction orthogonal to the axial direction and is connected to the coil end of the stator coil.

### SUMMARY OF THE INVENTION

In the motor unit of JP 2023-067111 A, the bus bar module is provided with an opening for supplying oil toward the coil end. The oil passing through the opening is supplied to the coil end.

The present disclosure provides a motor unit in which a coil end is cooled by supplying a refrigerant to the coil end.

An aspect of the present disclosure relates to a motor unit including a housing, a stator core, a stator coil, a bus bar module, and a spacer. The stator core is an annular body housed in the housing and extending along an axial direction, the stator core having an end surface located on one side in the axial direction. The stator coil is provided on the stator core and includes a coil end protruding from the end surface of the stator core. The bus bar module faces the coil end from an outer side in a radial direction orthogonal to the axial direction and is connected to the coil end of the stator coil. The spacer is provided between the end surface of the stator core and the bus bar module in the axial direction. The housing includes a first supply flow path that has a housing opening on a surface facing the spacer in the radial direction and is configured to supply a refrigerant toward the spacer. The spacer includes a second supply flow path that extends between a first spacer opening in an inner peripheral surface of the spacer and a second spacer opening in an outer peripheral surface of the spacer, the second supply flow path being configured to supply the refrigerant toward the coil end.

In an example embodiment, the refrigerant passes through the first supply flow path of the housing and the second supply flow path of the spacer and is supplied to the coil end. Thus, the coil end can be cooled.

In an example embodiment, the motor unit may further include a first fastening member that fastens the spacer and the stator core together to the housing.

In an example embodiment, a single first fastening member may fasten the spacer and the stator core together to the housing. Alternatively, a plurality of first fastening members may fasten the spacer and the stator core together to the housing.

In an example embodiment, it is possible to suppress the electromagnetic steel plates that make up the stator core being turned over.

In an example embodiment, the stator core may include a core body portion and a first core fixing portion. Here, the core body portion may be cylindrical and extend in the axial direction. The first core fixing portion may protrude outward in the radial direction from an outer peripheral surface of the core body portion and have a first core fixing hole through which the first fastening member passes. The spacer may include a spacer body portion and a first spacer fixing portion. Here, the spacer body portion may have the second supply flow path. The first spacer fixing portion may have a first spacer fixing hole through which the first fastening member passes.

In an example embodiment, the effect on the magnetism of the stator core can be reduced.

In an example embodiment, the spacer body portion may extend along a circumferential direction orthogonal to the axial direction and the radial direction. The first spacer fixing portion may be located at one end of the spacer body portion in the circumferential direction.

In an example embodiment, the spacer may be firmly fixed to the housing.

In an example embodiment, the first spacer fixing portion may protrude outward in the radial direction at the one end of the spacer body portion in the circumferential direction.

In an example embodiment, the spacer body portion may be made compact, and the spacer may be firmly fixed to the housing.

In an example embodiment, the motor unit may further include a second fastening member that fastens the spacer and the stator core together to the housing. The stator core may further include a second core fixing portion that protrudes outward in the radial direction from the outer peripheral surface of the core body portion and has a second core fixing hole through which the second fastening member passes. The spacer may further include a second spacer fixing portion that has a second spacer fixing hole through which the second fastening member passes. The second spacer fixing portion may be located at the other end of the spacer body portion in the circumferential direction.

In an example embodiment, the spacer can be firmly fixed to the housing.

In an example embodiment, the second spacer fixing portion may protrude outward in the radial direction at the other end of the spacer body portion in the circumferential direction.

In an example embodiment, the spacer body portion can be made compact, and the spacer can be firmly fixed to the housing.

In an example embodiment, the second spacer opening may be provided over a predetermined range of the spacer body portion in the circumferential direction.

In an example embodiment, the coil end can be cooled over the predetermined range. Thus, the coil end can be cooled thoroughly.

In an example embodiment, the second spacer opening may be oriented in a direction at an angle to the radial direction.

In an example embodiment, oil can be supplied to various portions of the coil end. Thus, the coil end can be cooled thoroughly.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic cross-sectional view of a motor unit as an example of an embodiment of the present disclosure;
FIG. 2 is a view of the motor unit viewed from one side in the axial direction, with a second housing, a bus bar module, and a spacer not attached to the motor unit;
FIG. 3 is a schematic cross-sectional view of the periphery of a protruding portion of a stator core of the motor unit;
FIG. 4 is a view of the motor unit viewed from one side in the axial direction, with the second housing not attached to the motor unit; and
FIG. 5 is a schematic cross-sectional view of the periphery of the bus bar module.

### DETAILED DESCRIPTION OF EMBODIMENTS

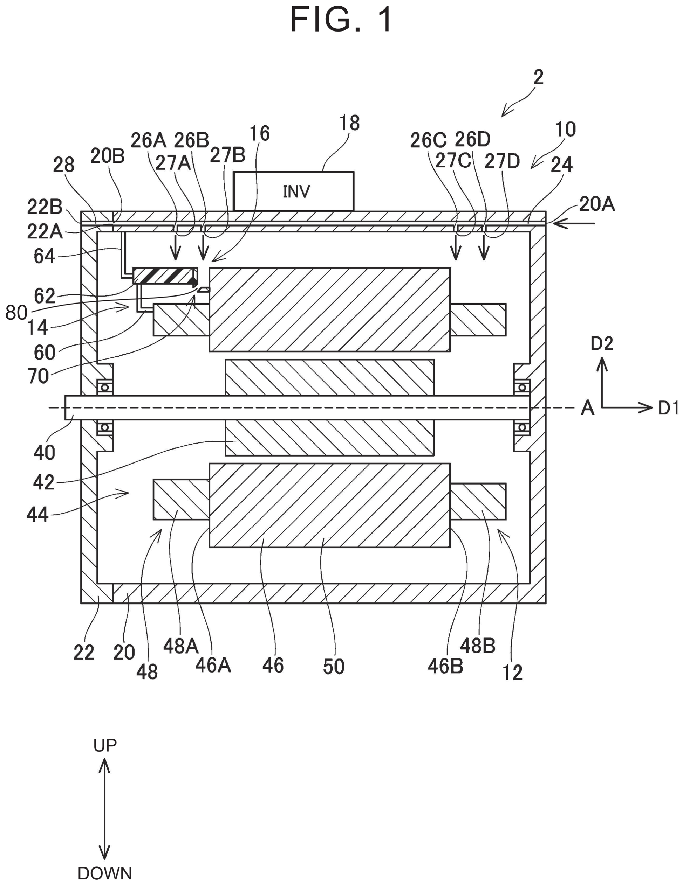

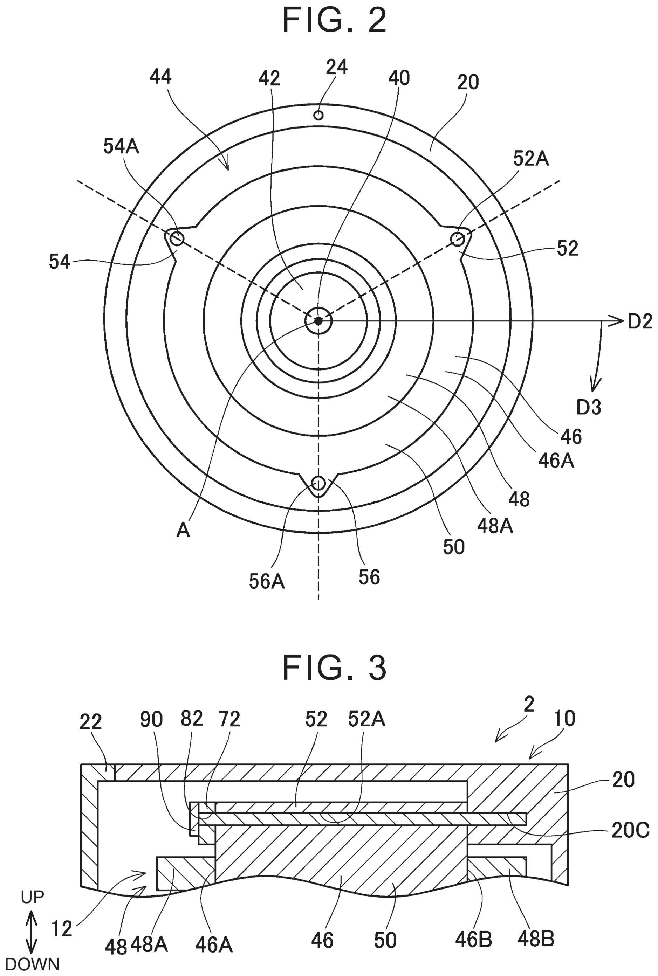

A motor unit 2 as an example of an embodiment will be described with reference to FIGS. 1 to 5. In the specification of the present disclosure, a cylindrical coordinate system including an axial direction D1, a radial direction D2, and a circumferential direction D3 (see FIG. 2) is defined based on a rotation axis A of a motor 12. The axial direction D1 is a direction parallel to the rotation axis A of the motor 12, and its coordinate axis is defined on the rotation axis. The radial direction D2 is a direction perpendicular to the axial direction D1, and is defined by a coordinate axis having the rotation axis A as the origin. The circumferential direction D3 in FIG. 2 is a direction perpendicular to the axial direction D1 and the radial direction D2, and is defined by a coordinate axis circulating around the rotation axis A. The up-down direction in a state in which the motor unit 2 is mounted on an electrified vehicle substantially coincides with the up-down direction in FIG. 1. The right-left direction in a state in which the motor unit 2 is mounted on an electrified vehicle may be different from the right-left direction in FIG. 1. However, in the following, the drawings may be described based on the right-left direction in FIG. 1, for ease of understanding.

As illustrated in FIG. 1, the motor unit 2 includes a housing 10, a motor 12, a bus bar module 14, a spacer 16, and an inverter 18. The inverter 18 is disposed outside the housing 10.

The housing 10 includes a first housing 20 and a second housing 22. The first housing 20 is open on one side in the axial direction D1. The one side in the axial direction D1 is the left side in FIG. 1. Hereinafter, the one side in the axial direction D1 will be referred to as "one axial side". The upper portion of the first housing 20 is provided with a first axial flow path 24 and a plurality of radial flow paths 26A to 26D. The first axial flow path 24 extends along the axial direction D1 between an opening 20A located on the surface of the first housing 20 on the other side in the axial direction D1 and an opening 20B located in the surface of the first housing 20 on the one axial side. The other side in the axial direction D1 is the right side in FIG. 1. Hereinafter, the other side in the axial direction D1 will be referred to as "other axial side". That is, the first axial flow path 24 penetrates the first housing 20 in the axial direction D1. The opening 20A of the first axial flow path 24 in the axial direction D1 is connected to a flow path in which an oil pump is provided. The radial flow paths 26A to 26D are arranged along the axial direction D1. The radial flow paths 26A to 26D are branched from the first axial flow path 24. The radial flow paths 26A to 26D extend from the first axial flow path 24 to openings 27A to 27D located in the inner surface of the first housing 20 in the radial direction D2, respectively. That is, the radial flow paths 26A to 26D extend along the up-down direction.

The second housing 22 is connected to an end portion of the first housing 20 on the one axial side. The upper portion of the second housing 22 is provided with a second axial flow path 28. The second axial flow path 28 extends along the axial direction D1 between an opening 22A located on the surface of the second housing 22 on the other axial side and an opening 22B located in the surface of the second housing 22 on the one axial side. The second axial flow path 28 penetrates the second housing 22 in the axial direction D1. The first axial flow path 24 and the second axial flow path 28 are in communication with each other. The oil that has passed through the second axial flow path 28 is supplied to a gear unit and the like disposed adjacent to the motor unit 2.

The motor 12 is housed in the housing 10. The motor 12 includes a shaft 40, a rotor 42, and a stator 44. The shaft 40 extends along the rotation axis A. The rotation axis A is the center of rotation of the shaft 40. The shaft 40 is rotatably supported by the housing 10 through bearings. The rotor 42 is fixed to the shaft 40.

The stator 44 includes a stator core 46 and a stator coil 48. The stator core 46 is an annular body extending along the axial direction D1. The stator core 46 is made up of a plurality of electromagnetic steel plates stacked in the axial direction D1. The stator core 46 has a first end surface 46A on one axial side and a second end surface 46B on the other axial side. As illustrated in FIG. 2, the stator core 46 includes a cylindrical core body portion 50 and a plurality of core fixing portions 52, 54, 56 that protrude outward in the radial direction D2 from the outer peripheral surface of the core body portion 50. The core fixing portions 52, 54, 56 are arranged at equal intervals in the circumferential direction D3. The core fixing portions 52, 54, 56 include core fixing holes 52A, 54A, 56A. As illustrated in FIG. 3, the core fixing holes 52A, 54A, 56A extend along the axial direction D1. The core fixing holes 52A, 54A, 56A penetrate the stator core 46 from the first end surface 46A to the second end surface 46B of the stator core 46.

The stator coil 48 in FIG. 1 is wound around the stator core 46. The stator coil 48 includes a U-phase coil, a V-phase coil, and a W-phase coil. The stator coil 48 includes a first coil end 48A (an example of a "coil end") and a second coil end 48B. The first coil end 48A protrudes toward one axial side from the first end surface 46A of the stator core 46. The second coil end 48B protrudes toward the other axial side from the second end surface 46B of the stator core 46.

The bus bar module 14 is disposed on one axial side of the stator core 46 in the axial direction D1. The bus bar module 14 faces the first coil end 48A from the outer side in the radial direction D2. The bus bar module 14 is connected to the first coil end 48A of the stator coil 48.

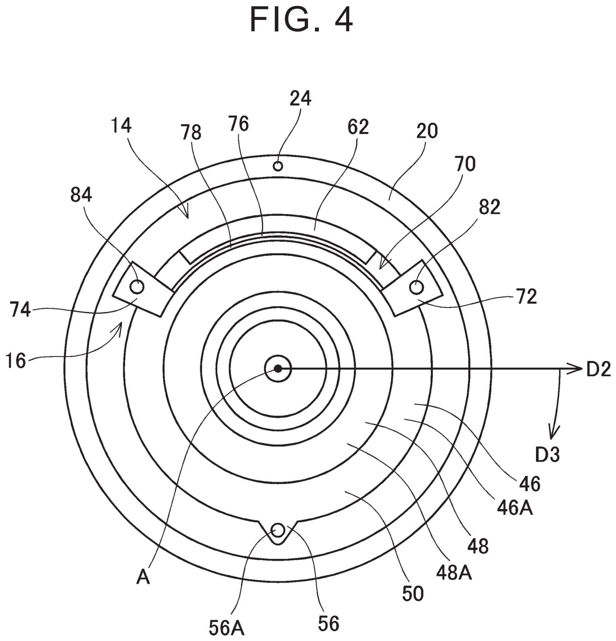

The bus bar module 14 includes a plurality of motor bus bars 60, a terminal block 62, and a plurality of relay bus bars 64. As illustrated in FIG. 4, the terminal block 62 extends along the circumferential direction D3 on the outer side of the first coil end 48A in the radial direction D2. In FIG. 4, the motor bus bars 60 and the relay bus bars 64 are omitted. It can also be said that the terminal block 62 is disposed above the first coil end 48A. As an example, the terminal block 62 is made of an insulating material such as a resin material.

Each of the motor bus bars 60 in FIG. 1 is a plate-shaped member, and is formed using a conductive member such as metal, for example. One end of each of the motor bus bars 60 is fixed to the terminal block 62, and the other end is welded to the U-phase coil, the V-phase coil, and the W-phase coil of the stator core 46.

Each of the relay bus bars 64 is a plate-shaped member, and is formed using a conductive member such as metal, for example. One end of each of the relay bus bars 64 is fixed to the terminal block 62, and the other end is electrically connected to the inverter 18.

As illustrated in FIG. 4 , the spacer 16 includes a spacer body portion 70, a first spacer fixing portion 72, and a second spacer fixing portion 74. As an example, the spacer 16 is made of an insulating material such as a resin material. The spacer body portion 70 extends along the circumferential direction D3 between the core fixing portion 52 (see FIG. 2) and the core fixing portion 54 (see FIG. 2). The first spacer fixing portion 72 is provided at one end of the spacer body portion 70 in the circumferential direction D3. The second spacer fixing portion 74 is provided at the other end of the spacer body portion 70 in the circumferential direction D3.

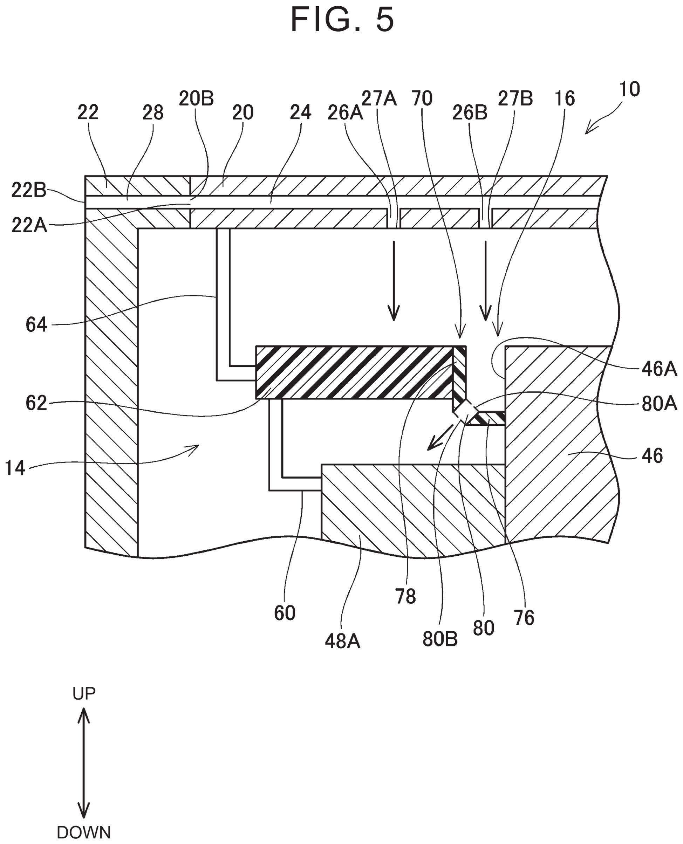

As illustrated in FIG. 1, an end portion of the spacer body portion 70 on the inner side in the radial direction D2 is disposed between the first coil end 48A and the terminal block 62. In the radial direction D2, the position of an end portion of the spacer body portion 70 on the outer side in the radial direction D2 coincides with the position of an end portion of the terminal block 62 on the outer side in the radial direction D2. As illustrated in FIG. 5, the spacer body portion 70 is disposed between the first end surface 46A of the stator core 46 and the terminal block 62 of the bus bar module 14 in the axial direction D1. The spacer body portion 70 includes a bottom wall 76, a circumferential wall 78, and a spacer flow path 80. The terminal block 62 of the bus bar module 14 abuts against the circumferential wall 78. The spacer flow path 80 extends continuously between the first spacer fixing portion 72 and the second spacer fixing portion 74 in the circumferential direction D3. The spacer flow path 80 extends between a first spacer opening 80A located on the inner peripheral surface of the spacer body portion 70 and a second spacer opening 80B located in the outer peripheral surface of the spacer body portion 70. The second spacer opening 80B is oriented in a direction at an angle to the radial direction D2. The second spacer opening 80B is oriented such that oil discharged from the second spacer opening 80B flows toward a portion of the first coil end 48A below the bus bar module 14. As an example, the second spacer opening 80B is inclined at 45 degrees with respect to the radial direction D2.

As illustrated in FIG. 4, the first spacer fixing portion 72 protrudes outward in the radial direction D2 at one end of the spacer body portion 70 in the circumferential direction D3. The first spacer fixing portion 72 covers the core fixing portion 52 (see FIG. 2) from one axial side. The first spacer fixing portion 72 has a first spacer fixing hole 82. As illustrated in FIG. 3, the first spacer fixing hole 82 penetrates the first spacer fixing portion 72 in the axial direction D1. The fastening member 90 passes through the first spacer fixing hole 82 and the core fixing hole 52A and is screwed into a screw fitting portion 20C of the first housing 20.

As illustrated in FIG. 4, the second spacer fixing portion 74 protrudes outward in the radial direction D2 at the other end of the spacer body portion 70 in the circumferential direction D3. The second spacer fixing portion 74 covers the core fixing portion 54 (see FIG. 2) from one axial side. The second spacer fixing portion 74 has a second spacer fixing hole 84. The second spacer fixing hole 84 penetrates the second spacer fixing portion 74 in the axial direction D1. The fastening member 90 (see FIG. 3) passes through the second spacer fixing hole 84 and the core fixing hole 54A and is screwed into a screw fitting portion of the first housing 20. The spacer 16 and the stator core 46 are fastened together to the first housing 20 by a plurality of fastening members 90.

The flow of oil supplied to the first coil end 48A will be described with reference to FIG. 5. First, oil is supplied to the first axial flow path 24 of the first housing 20. Of the radial flow paths 26A to 26D of the first housing 20, the radial flow path 26B is disposed above the spacer 16. Therefore, the oil discharged from the radial flow path 26B is supplied to the spacer 16. The oil supplied to the spacer 16 passes through the spacer flow path 80 of the spacer 16 and is supplied to the first coil end 48A. Since the second spacer opening 80B is oriented in a direction at an angle to the radial direction D2, the oil discharged from the spacer flow path 80 is supplied to a portion of the first coil end 48A below the bus bar module 14.

Furthermore, the radial flow path 26A is disposed above the terminal block 62 of the bus bar module 14. Therefore, the oil discharged from the radial flow path 26A reaches the upper surface of the terminal block 62. A part of the oil that reaches the upper surface of the terminal block 62 flows toward the spacer 16. The oil flowing toward the spacer 16 is supplied to a portion of the first coil end 48A below the bus bar module 14, as with the oil supplied to the spacer 16 from the radial flow path 26B.

As described above, the motor unit 2 includes: the housing 10; the stator core 46 that is an annular body housed in the housing 10 and extending along the axial direction D1, the stator core 46 having the first end surface 46A (example of "end surface") located on one side in the axial direction; the stator coil 48 provided on the stator core 46 and having the first coil end 48A (example of "coil end") protruding from the first end surface 46A of the stator core 46; the bus bar module 14 that faces the first coil end 48A from the outer side in the radial direction D2 orthogonal to the axial direction D1 and is connected to the first coil end 48A of the stator coil 48; and the spacer 16 provided between the first end surface 46A of the stator core 46 and the bus bar module 14 in the axial direction D1. The housing 10 includes the radial flow path 26B (example of "first supply flow path") that has the opening 27B (example of "housing opening") in a surface facing the spacer 16 in the radial direction D2, the radial flow path 26B supplying oil (example of "refrigerant") toward the spacer 16. The spacer 16 includes the spacer flow path 80 (example of "second supply flow path") that extends between the first spacer opening 80A in the inner peripheral surface of the spacer 16 and the second spacer opening 80B in the outer peripheral surface of the spacer 16, the spacer flow path 80 supplying the oil toward the first coil end 48A.

According to the above configuration, oil passes through the radial flow path 26B of the housing 10 and the spacer flow path 80 of the spacer 16 and is supplied to the first coil end 48A. Thus, the first coil end 48A can be cooled.

The motor unit 2 further includes the fastening member 90 (example of "first fastening member") that fastens the spacer 16 and the stator core 46 together to the housing 10.

According to the above configuration, it is possible to suppress the electromagnetic steel plates that make up the stator core 46 being turned over.

The stator core 46 includes the core body portion 50 that is cylindrical and extends in the axial direction D1, and the core fixing portion 52 (example of "first core fixing portion") that protrudes outward in the radial direction D2 from the outer peripheral surface of the core body portion 50 and has the core fixing hole 52A (example of "first core fixing hole") through which the fastening member 90 passes. The spacer 16 includes the spacer body portion 70 that has the spacer flow path 80, and the first spacer fixing portion 72 that has the first spacer fixing hole 82 through which the fastening member 90 passes.

According to the above configuration, the effect on the magnetism of the stator core 46 can be reduced.

The spacer body portion 70 extends along the circumferential direction D3. The first spacer fixing portion 72 is located at one end of the spacer body portion 70 in the circumferential direction D3.

According to the above configuration, the spacer 16 may be firmly fixed to the housing 10.

The first spacer fixing portion 72 protrudes outward in the radial direction at one end of the spacer body portion 70 in the circumferential direction D3.

According to the above configuration, the spacer body portion 70 may be made compact, and the spacer 16 may be firmly fixed to the housing 10.

The motor unit 2 further includes the fastening member 90 (example of "second fastening member") that fastens the spacer 16 and the stator core 46 together to the housing 10. Here, "the first fastening member" and "the second fastening member" are shown as "the fastening member 90" in common in the FIGs. The stator core 46 further includes the core fixing portion 54 (example of "second core fixing portion") that protrudes outward in the radial direction D2 from the outer peripheral surface of the core body portion 50 and has the core fixing hole 54A (example of "second core fixing hole") through which the fastening member 90 passes. The spacer 16 further includes the second spacer fixing portion 74 that has the second spacer fixing hole 84 through which the fastening member 90 passes. The second spacer fixing portion 74 is located at the other end of the spacer body portion 70 in the circumferential direction D3.

According to the above configuration, the spacer 16 can be firmly fixed to the housing 10.

The second spacer fixing portion 74 protrudes outward in the radial direction D2 at the other end of the spacer body portion 70 in the circumferential direction D3.

According to the above configuration, the spacer body portion 70 can be made compact, and the spacer 16 can be firmly fixed to the housing 10.

The second spacer opening 80B is provided over a predetermined range of the spacer body portion 70 in the circumferential direction D3.

According to the above configuration, the first coil end 48A can be cooled over the predetermined range. Thus, the first coil end 48A can be cooled thoroughly.

The second spacer opening 80B is oriented in a direction at an angle to the radial direction D2.

According to the above configuration, oil can be supplied to various portions of the first coil end 48A. Thus, the first coil end 48A can be cooled thoroughly. In particular, in the present embodiment, oil can be supplied to a portion of the first coil end 48A located below the bus bar module 14.

Furthermore, in the present embodiment, the terminal block 62 of the bus bar module 14 is not provided with a hole for supplying oil to the first coil end 48A. Therefore, the effect on the magnetism of the bus bar module 14 can be reduced compared to a configuration in which the terminal block 62 of the bus bar module 14 is provided with such a hole.

While a specific example of the technology disclosed in the specification of the present disclosure has been described in detail above, this is merely exemplary and does not limit the scope of the claims. The technology described in the claims includes various modifications and alterations of the specific example given above.

First, a first modification of the present embodiment will be described. The spacer 16 and the stator core 46 may be separately fixed to the housing 10.

Next, a second modification of the present embodiment will be described. At least one of the core fixing holes 52A, 54A, 56A of the stator core 46 may be provided in the core body portion 50.

Next, a third modification of the present embodiment will be described. At least one of the two end portions of the spacer 16 in the circumferential direction D3 may not protrude outward in the radial direction.

Next, a fourth modification of the present embodiment will be described. The spacer 16 and the stator core 46 may be fastened together to the housing 10 by one fastener or by three or more fasteners.

Next, a fifth modification of the present embodiment will be described. The spacer body portion 70 may have a plurality of spacer flow paths. In the present modification, the angles of the oil supply ports of the spacer flow paths relative to the radial direction D2 may be the same as or different from each other.

Next, a sixth modification of the present embodiment will be described. The second spacer opening 80B of the spacer body portion 70 may be parallel to the radial direction D2.

Next, a seventh modification of the present embodiment will be described. The spacer body portion 70 of the spacer 16 may extend along a direction orthogonal to the up-down direction, specifically, along the right-left direction in FIG. 4.

The technical elements described in the specification of the present disclosure or illustrated in the drawings exhibit technical utility alone or in various combinations, and are not limited to the combinations set forth in the claims as originally filed. In addition, the technology described in the specification of the present disclosure or illustrated in the drawings can achieve a plurality of objects at the same time, and achieving one of the objects itself has technical utility.

## Claims

1. A motor unit (2) comprising:
a housing (10);
a stator core (46) that is an annular body housed in the housing (10) and extending along an axial direction, the stator core (46) having an end surface located on one side in the axial direction;
a stator coil (48) provided on the stator core (46) and including a coil end (48A) protruding from the end surface of the stator core (46);
a bus bar module (14) that faces the coil end (48A) from an outer side in a radial direction orthogonal to the axial direction and is connected to the coil end (48A) of the stator coil (48); and
a spacer (16) provided between the end surface of the stator core (46) and the bus bar module (14) in the axial direction, wherein:
the housing (10) includes a first supply flow path (26B) that has a housing opening (27B) on a surface facing the spacer (16) in the radial direction and is configured to supply a refrigerant toward the spacer (16); and
the spacer (16) includes a second supply flow path (80) that extends between a first spacer opening (80A) in an inner peripheral surface of the spacer (16) and a second spacer opening (80B) in an outer peripheral surface of the spacer (16), the second supply flow path (80) being configured to supply the refrigerant toward the coil end (48A).

2. The motor unit (2) according to claim 1, further comprising a first fastening member (90) that fastens the spacer (16) and the stator core (46) together to the housing (10).

3. The motor unit (2) according to claim 2, wherein a single first fastening member (90) fastens the spacer (16) and the stator core (46) together to the housing (10).

4. The motor unit (2) according to claim 2, wherein a plurality of first fastening members (90) fastens the spacer (16) and the stator core (46) together to the housing (10).

5. The motor unit (2) according to any one of claims 2 to 4, wherein:
the stator core (46) includes a core body portion (50) and a first core fixing portion (52), the core body portion (50) being cylindrical and extending in the axial direction, and the first core fixing portion (52) protruding outward in the radial direction from an outer peripheral surface of the core body portion (50) and having a first core fixing hole (52A) through which the first fastening member (90) passes; and
the spacer (16) includes a spacer body portion (70) and a first spacer fixing portion (72), the spacer body portion (70) having the second supply flow path (80), and the first spacer fixing portion (72) having a first spacer fixing hole (82) through which the first fastening member (90) passes.

6. The motor unit (2) according to claim 5, wherein:
the spacer body portion (70) extends along a circumferential direction orthogonal to the axial direction and the radial direction; and
the first spacer fixing portion (72) is located at one end of the spacer body portion (70) in the circumferential direction.

7. The motor unit (2) according to claim 6, wherein the first spacer fixing portion (72) protrudes outward in the radial direction at the one end of the spacer body portion (70) in the circumferential direction.

8. The motor unit (2) according to any one of claims 5 to 7, further comprising a second fastening member (90) that fastens the spacer (16) and the stator core (46) together to the housing (10), wherein:
the stator core (46) further includes a second core fixing portion (54) that protrudes outward in the radial direction from the outer peripheral surface of the core body portion (50) and has a second core fixing hole (54A) through which the second fastening member (90) passes;
the spacer (16) further includes a second spacer fixing portion (74) that has a second spacer fixing hole (84) through which the second fastening member (90) passes; and
the second spacer fixing portion (74) is located at the other end of the spacer body portion (70) in the circumferential direction.

9. The motor unit (2) according to claim 8, wherein the second spacer fixing portion (74) protrudes outward in the radial direction at the other end of the spacer body portion (70) in the circumferential direction.

10. The motor unit (2) according to any one of claims 6 to 9, wherein the second spacer opening (80B) is provided over a predetermined range of the spacer body portion (70) in the circumferential direction.

11. The motor unit (2) according to any one of claims 1 to 10, wherein the second spacer opening (80B) is oriented in a direction at an angle to the radial direction.
